# EUROPÄISCHE PATENTSCHRIFT

(11) **EP 0 514 740 B1**
(45) Veröffentlichungstag und Bekanntmachung des Hinweises auf die Patenterteilung: **06.09.1995**
(21) Anmeldenummer: 92107952.1
(22) Anmeldetag: 12.05.1992
(51) Int. Cl.: D21C 5/02, D21B 1/32

(54) **Auflöseverfahren für zu deinkendes Altpapier**
Process of pulping waste paper for deinking
Procédé de mise en pâte de vieux papiers pour désencrage

(30) Priorität: 24.05.1991 DE 4116917
(43) Veröffentlichungstag der Anmeldung: 25.11.1992
(73) Patentinhaber: Voith Sulzer Stoffaufbereitung GmbH, 88191 Ravensburg (DE)
(72) Erfinder: Britz, Herbert, W-7750 Konstanz (DE); Linck, Erich, Dr., W-7987 Weingarten (DE); Selder, Harald, W-7981 Schlier (DE)

(56) Entgegenhaltungen:
- EP-A- 0 172 118
- US-A- 4 360 402

## Beschreibung

Die Erfindung betrifft ein Verfahren zur Auflösung von Altpapiermaterial, insbesondere für mit Druckfarben belastetes Altpapier, zur Erzeugung einer wässrigen, pumpfähigen Suspension mit in dem Material enthaltenen Papierfasern, welche Suspension für eine nachfolgende Aufbereitung mit Denken und zur Verarbeitung auf einer Papiermaschine zu einer Papierbahn von gewünschter Qualität mit heller, insbesondere weißer Farbe vorgesehen ist, bei welchem Auflöseverfahren die Druckfarben von den Papierfasern abgelöst werden sollen und wozu mindestens ein Teil der bei der dem Auflösen nachfolgenden Aufbereitung und an der Papiermaschine anfallenden Filtrate, das sogenannte Rückwasser, benutzt wird. Dieses Rückwasser ist dabei ein Teil einer bei dieser Papierherstellung im Kreislauf zirkulierenden Wassermenge.

Das Auflösen wird in einem Stofflöser, dem sogenannten Pulper, vorgenommen, dem weitere Aufbereitungsschritte, einschließlich einer Deinkinganlage, folgen. Dabei wird mittels bekannter Verfahrensschritte aus dem Altpapiermaterial eine an einer Papiermaschine zu verarbeitende, gewünschte Stoffsuspension erzeugt. Die Aufgabe des Stofflösers ist das Auflösen des Altpapiermaterials zur Erzeugung einer mehr oder weniger stippenfreien, pumpfähigen Suspension unter Ablösung der Druckfarben von den Papierfasern. Dazu werden dem in dem Pulper einzusetzenden Wasser die Ablösung der Druckfarben unterstützende Chemikalien, wie z.B. Natronlauge, Wasserglas und/oder Tenside zugegeben, bevor das Altpapiermaterial eingebracht wird. Das in dem Pulper einzusetzende Wasser ist üblicherweise das beim Herstellungsprozeß anfallende Rückwasser, das mehr oder weniger ungereinigt verwendet wird.

Ein gattungsgleiches Verfahren, wie es als Stand der Technik oben beschrieben ist, z.B. aus TAPPI, Band 63, Nr. 9, September 1980, Seiten 113 - 116; L. Pfalzer:"Deinking of secondary fibers - a comparison of washing and flotation" entnehmbar.

Dort wird das aus der Eindickung stammende Wasser einer Deinking-Anlage zur Auflösung in den Pulper Zurückgeführt.

In der US-A-4 360 402 wird ein Auflöseverfahren beschrieben mit anschließender Eindickung und Deinking-Verfahren. Für die ganze Auflösung soll geklärtes Wasser oder Frischwasser, eventuell zusammen mit Chemikalien, eingesetzt werden.

Das mehr oder weniger ungereinigte Rückwasser enthält eine Menge fein bis feinst dispergierter Druckfarbenpartikel, was Z.B. durch eine Fällung leicht nachzuweisen ist. Da bei dem Auflösen im Pulper das Tränken des Altpapiers und das Ablösen der Druckfarbenpartikel im wesentlichen gleichzeitig verläuft, erhöht sich die Anzahl der Druckfarbenpartikel in der Suspension. Die Partikel, die mit dem Rückwasser eingebracht sind, addieren sich mit den frisch von den Papierfasern abgelösten und reichern sich stark an. Die feinsten Druckfarbenpartikel dringen während des Auflösevorgangs zusammen mit dem Wasser in das ursprünglich trockene Lumen, d.h. in die Zellenhohlräume der Fasern ein, von wo sie bei der nachfolgenden Stoffaufbereitung nicht mehr wegzubringen sind. Dieser Vorgang wird in der Fachsprache als ''lumenloading" bezeichnet. Er führt unter den hier vorliegenden Bedingungen zur schwer rückgängig zu machenden Vergrauung des Stoffes, aus welchem sich dann helle, bzw. weiße Sorten Papier nicht mehr herstellen lassen. Das Beschriebene wird verstärkt dann zum Problem, falls das Altpapiermaterial mit Wasser dispergierten Farben beim sogenannten Flexodruckverfahren bedruckt sind, da diese Druckfarbenpartikel besonders fein sind und deshalb leicht in das Lumen der Fasern eindringen.

Es soll die Aufgabe gelöst werden, dieses Vergrauen des Stoffes zu verhindern, möglichst ohne zu viel teures Klar- oder Frischwasser bei der Auflösung zu benötigen.

Diese Aufgabe ist beim Auflösen des Altpapiermaterials der anfangs beschriebenen Art erfindungsgemäß durch die im Kennzeichen des Anspruchs 1 genannten Maßnahmen gelöst.

Ist das Faserlumen mit solchem sauberen, reinen Wasser aufgrund der Kapillarwirkung einmal gefüllt, kann kein weiterer Stofftransport von den Druckfarbenpartikeln in die Hohlräume der Zellen der Papierfaser später beim eigentlichen Auflösen auch unter Anwendung des mehr oder weniger ungereinigten Rückwassers mehr stattfinden. Die bisher unvermeidliche und irreversible Vergrauung des Stoffes wird dadurch verhindert, bei dennoch ökonomischem Rückwassereinsatz.

Bei dem Verfahren kann nämlich mit Vorteil mindestens ein großer Teil des Rückwassers benutzt werden, wobei ein Teil des Rückwassers mit bekannten Mitteln, z.B. durch Fällung und anschließender Mikroflotation, zum Wasser aufbereitet wird, das frei von jeglichen, bis mikroskopisch feinen Druckfarbenpartikeln und von Farben ablösenden Chemikalien ist, welches Wasser in der Benetzungsstufe zum Tränken, Benetzen des Altpapiermaterials angewendet wird. Damit wird der Kreislauf des Wassers in dem Papierherstellungsverfahren bis in die Benetzungsstufe geführt.

Die bei dem Herstellungsverfahren im Kreislauf geführte Wassermenge muß regelmäßig ergänzt werden, um die unvermeidlichen Verluste auszugleichen. Es ist von Vorteil, wenn zum Ergänzen der bei der Papierherstellung aus Altpapiermaterial zirkulierenden Wassermenge das nach Bedarf zuzuführende, saubere, reine Frischwasser in die erfindungsgemäße Benetzungsstufe hineingeführt wird, um dort mindestens zum Teil zu dem Tränken, Benetzen angewendet zu werden.

Die Wassermenge, die zum Auffüllen des Lumens der zu benetzenden Papierfasern notwendig ist, entspricht etwa dem otro-Gewicht der Papierfasern.

Im weiteren wird ein Ausführungsbeispiel des erfindungsgemäßen Auflösens des Altpapiermaterials anhand einer Zeichnung näher beschrieben und erklärt.

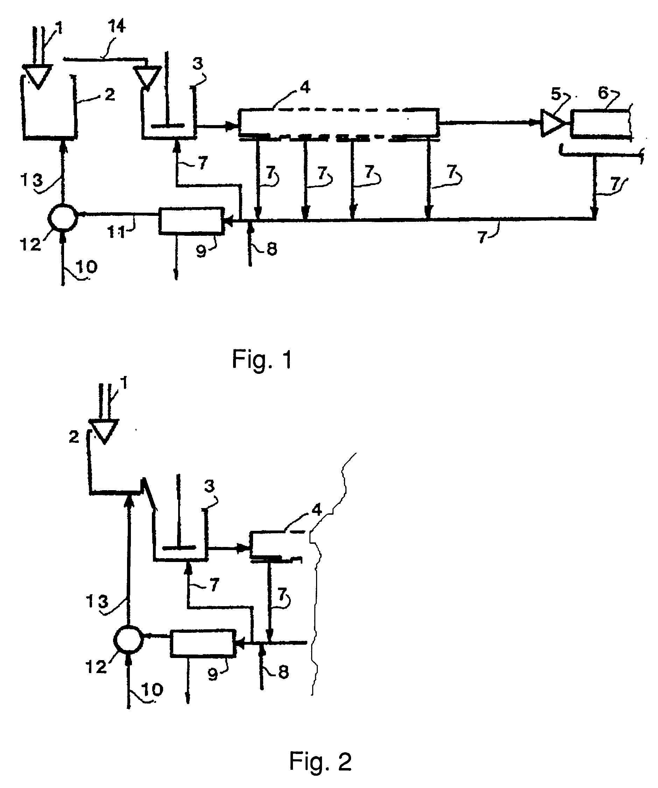

Die Beschreibung bezieht sich auf Figur 1 der Zeichnung, die eine Anlage zur Papierherstellung aus Altpapiermaterial in vereinfachtem Schema darstellt.

Das zu verarbeitende Altpapiermaterial 1 wird in trockenem Zustand angeliefert. Es wird zur Benetzung 2 in eine Vorrichtung eingebracht, wo es mit Wasser benetzt und getränkt wird, das frei von jeglichen bis mikroskopisch kleinen, feinsten Druckfarbenpartikeln und von Farben ablösenden Chemikalien ist. Der Benetzungsvorgang dauert so lange, bis mindestens das Lumen, d.h. die Zellenhohlräume der Papierfasern mit dem besagten, reinen Wasser gefüllt ist. Längeres Vorgehen ist überflüssig. Die zum Benetzen notwendige Wassermenge entspricht etwa dem otro-Gewicht der Papierfasern. Das zum Benetzen vorgeschriebene Wasser wird in die Benetzungsstufe aus der Leitung 13 eingeführt. Das vorbehandelte Material mit den mit dem reinen Wasser gefüllten Hohlräumen der Zellen der Papierfasern wird zu dem eigentlichen Auflösen 3 in einen bekannten Pulper eingetragen, wo das Auflösen unter Zugabe von Rückwasser 7 vor sich geht.

Auch wenn bei dem hier dargestellten Beispiel zwei getrennte Behälter zur Durchführung beider genannten Verfahrensschritte skizziert sind, ist auch vorteilhaft die Benetzung und Auflösung im selben Behälter möglich. Dabei würden die beiden verschiedenen Wasserqualitäten zeitlich nacheinander eingegegeben, und zwar zuerst das Benetzungwasser aus der Leitung 13 und dann das Rückwasser 7.

Das mehr oder weniger ungereinigte Rückwasser 7 enthält auch fein dispergierte Druckfarbenpartikel und Ablösung unterstützende Chemikalien, die nach Bedarf dem Rückwasser über eine Leitung 8 zugegeben werden. Durch das Auflösen 3 entsteht eine mehr oder weniger stippenfreie, pumpfähige Suspension, die in einer Stoffaufbereitungsanlage 4 mit Deinkingprozeß bearbeitet wird. Da in dem in der Verfahrensstufe zur Benetzung 2 behandelten Altpapiermaterial die Hohlräume der Papierfaserzellen bereits mit dem reinen Wasser aufgefüllt sind, können bei dem Auflösen keine in der Suspension vorhandenen Druckfarbenpartikel mehr eindringen, wodurch die irreversible Vergrauung des Stoffes verhindert wird.

Die durch das Auflösen 3 hergestellte Suspension wird auf bekannte Weise in einer folgenden Stoffaufbereitungsanlage 4 zum Stoff gewünschter Qualität zur Übergabe über einen Stoffauflauf 5 für eine Papiermaschine 6 aufbereitet. Dabei wird auch das Deinken, d.h. eine Farbenentfernung vorgenommen. Eine solche Anlage ist aus bekannten Apparaten dem Zweck entsprechend zusammengestellt und wird gemäß einer bekannten Technologie zum Herstellen einer Papierstoffsuspenion gewünschter Qualität betrieben.

Entlang dieser Anlage 4 und der Papiermaschine 6 fallen verschiedene Filtrate an, die je nach Bedarf mehr oder weniger gereinigt als Rückwasser 7 zurückgeführt werden. Dieses Rückwasser 7 wird verschiedentlich in manche Stufen des Papierherstellungsprozesses eingeführt und dort eingesetzt, so auch zu dem Auflösen 3. Ein Teil des Rückwassers 7 wird in den Reiniger geleitet, wo gemäß bekannter Technologie das Rückwasser 7 von jeglichen bis mikroskopisch kleinen, feinsten Druckfarbenpartikeln befreit wird. Das dadurch gewonnene saubere, reine Wasser 11 kann dann bei der Benetzung 2 angewendet werden. Dies kann über ein Ventil 12 und über die Leitung 13 geschehen.

Die bei dem Herstellungsprozeß benötigte Wassermenge zirkuliert wie beschrieben in einem Kreislauf. Dabei kommen unvermeidbare Wasserverluste vor, die immer wieder durch Zuführen von sauberem Frischwasser ersetzt werden müssen, um den Kreislauf aufrechtzuerhalten. Mit Vorteil kann mindestens ein Teil des benötigten Frischwassers aus einer Leitung 10 über das Ventil 12 und die Leitung 13 in die Benetzungsstufe eingeführt werden und dort zu dem Tränken, Benetzen des Altpapiermaterials eingesetzt werden. Je nach der Auslegung des ganzen Herstellungsprozesses ist es also möglich, bei der Benetzung 2 mit reinem Frischwasser 10, mit gereinigtem und reinem Wasser 11 aus dem Rückwasser 7 und mit einem Gemisch von Frischwasser 10 und gereinigtem Wasser 11 zu arbeiten, welches Gemisch in dem Mischventil 12 entsteht und über die Leitung 13 in die Vorrichtung zur Benetzung 2 gelangt.

Figur 2 zeigt schematisch den ersten Teil des erfindungsgemäßen Verfahrens in einer variierten Ausführungsform gemäß den Ansprüchen 7 oder 9.

## Patentansprüche

1. Verfahren (3) zur Auflösung von Altpapiermaterial (1), insbesondere für mit Druckfarben belastetes Altpapier zur Erzeugung einer wässrigen, pumpfähigen Suspension mit in dem Material enthaltenen Papierfasern, welche Suspension für eine nachfolgende Aufbereitung (4) mit Deinken und zur Verarbeitung auf einer Papiermaschine (5, 6) zu einer Papierbahn von gewünschter Qualität von heller, insbesondere weißer Farbe vorgesehen ist, bei welchem Auflöseverfahren (3) die Druckfarben von den Papierfasern abgelöst werden und wozu mindestens ein Teil der bei der dem Auflösen nachfolgenden Aufbereitung (4) und der an der Papiermaschine (6) anfallenden Filtrate, das sogenannte Rückwasser (7), benutzt wird,
**dadurch gekennzeichnet,**
daß der Auflösevorgang (3) zu Beginn eine Verfahrensstufe zur Benetzung (2) enthält, in welcher das angelieferte, im wesentlichen trockene Altpapiermaterial (1) mit Wasser (10 bzw. 11) benetzt und getränkt wird, so lange, bis mindestens das Lumen der Papierfasern mit dem Wasser gefüllt ist, wobei das Wasser mit bis mikroskopisch feinen Druckfarbenpartikeln höchstens sehr gering belastet und möglichst frei von Farben ablösenden Chemikalien ist, wozu ein Teil des Rückwassers (7) mit bekannten Mitteln (9) zum Wasser (11) aufbereitet und gegebenfalls zum Ergänzen reines Frischwasser (10) hineingeführt wird, und daß das dermaßen getränkte, benetzte Altpapiermaterial erst danach dem eigentlichen Auflöseschritt (3) unter Zugabe des in besagter Weise gewonnenen Rückwassers (7), dem nach Bedarf auf bekannte Weise Farben ablösende Chemikalien (8) zugegeben werden, unterzogen wird.

2. Verfahren nach Anspruch 1, **dadurch gekennzeichnet,** daß ein Teil des Rückwassers (7) mit bekannten Mitteln (9) zum Wasser (11) aufbereitet wird das frei von jeglichen bis mikroskopisch feinen Druckfarbenpartikeln und von Farben ablösenden Chemikalien ist, welches Wasser (11) zur Benetzung (2) und zum Tränken des Altpapiermaterials (1) angewendet wird.

3. Verfahren nach Anspruch 2, **dadurch gekennzeichnet,** daß das Rückwasser (7) zusätzlich auch aus einem Teil der an der Papiermaschine (6) anfallenden Filtrate besteht.

4. Verfahren nach Anspruch 1, **dadurch gekennzeichnet,** daß die Wassermenge, die zum Auffüllen des Lumens der zu benetzenden Papierfasern zugeführt wird, etwa dem Trocken-Gewicht der Papierfasern entspricht.

5. Verfahren nach Anspruch 1, **dadurch gekennzeichnet,** daß die Benetzung (2) und der Auflöseschritt (3) nacheinander in derselben Vorrichtung durchgeführt werden.

6. Verfahren nach Anspruch 1, **dadurch gekennzeichnet,** daß Benetzung (2) und Auflöseschritt (3) in verschiedenen Vorrichtungen durchgeführt wird, wobei das Altpapiermaterial in die erste Vorrichtung eingetragen, darin benetzt und danach aus der ersten in die zweite Vorrichtung transportiert (Pfeil 14) wird, wobei die zweite Vorrichtung ein Stofflöser ist.

7. Verfahren nach Anspruch 1, **dadurch gekennzeichnet,** daß die Benetzung (2) in einem ersten Arbeitsraum und der Auflöseschritt (3) in einem zweiten, vom ersten abgeteilten Arbeitsraum derselben Vorrichtung durchgeführt werden, wobei das Altpapiermaterial nach erfolgter Benetzung (2) vom ersten in den zweiten Arbeitsraum transportiert wird.

8. Verfahren nach Anspruch 7, **dadurch gekennzeichnet,** daß der erste Arbeitsraum höher liegt als der zweite und der Transport des benetzten Altpapiermaterials vom ersten in den zweiten Arbeitsraum durch Herabfallen oder Herabrutschen erfolgt.

## Claims

1. Process (3) for dispersing used paper materials (1), in particular for used paper printed with inks, in order to produce an aqueous suspension capable of being pumped, with paper fibres contained in the material, the suspension being intended for subsequent treatment (4) with de-inking and for processing on a paper machine (5, 6) to a paper web of the desired quality and having a light, in particular white colour, in which dispersing process (3) the inks are dissolved from the paper fibres and to which end at least part of the filtrates arising from the treatment (4) subsequent to dispersion and at the paper machine (6), known as the effluent water (7), is used,
characterised in that
the dispersion process (3) involves as a first Stage a wetting operation (2), in which the substantially dry used paper material (1) supplied is wetted with and soaked in water (10 and 11 respectively) until at least the lumen of the paper fibres is filled with water, the water being at most very slightly charged with ink particles of up to microscopic fineness and being as free as possible from ink-dissolving chemicals, to which end some of the effluent water (7) is treated with known means (9) to form water (11) and is optionally passed on to supplement clean running water (10), and in that the used paper material thus soaked and wetted is only then subjected to the dispersion stage (3) proper with the addition of the effluent water (7), which is obtained in the manner mentioned and to which if required ink-dissolving chemicals (8) are added.

2. Process according to claim 1, characterised in that some of the effluent water (7) is treated with known means (9) to form water (11) which is free from any microscopically fine ink particles and of ink solvents and which is used to wet (2) and soak the used paper material (1).

3. Process according to claim 2, characterised in that the effluent water (7) additionally consists of part of the filtrates arising at the paper machine (6).

4. Process according to claim 1, characterised in that the quantity of water supplied to fill the lumen of the paper fibre to be wetted corresponds approximately to the dry weight of the paper fibres.

5. Process according to claim 1, characterised in that the wetting (2) and dispersion stage (3) are carried out consecutively in the same apparatus.

6. Process according to claim 1, characterised in that the wetting (2) and dispersion stage (3) are carried out in different apparatus, the used paper material being charged into the first apparatus, wetted therein and then conveyed from the first into the second apparatus (arrow 14), wherein the second apparatus is a pulper.

7. Process according to claim 1, characterised in that wetting (2) is carried out in a first processing chamber and the dispersion stage (3) is carried out in a second, separate processing chamber of the same apparatus, wherein the used paper material is conveyed, upon completion of the wetting operation (2), from the first into the second processing chamber.

8. Process according to claim 7, characterised in that the first processing chamber is disposed higher than the second, and the wetted used paper material is conveyed from the first into the second operating chamber by dropping or sliding down.

## Revendications

1. Procédé (3) de mise en pâte de vieux papiers (1), en particulier de vieux papiers chargés d'encre d'impression, pour produire une suspension aqueuse, susceptible d'être pompée, avec des fibres de papier contenues dans le matériau, laquelle suspension est prévue pour un traitement suivant (4) avec désencrage et pour transformation sur une machine à papier (5, 6) en une bande de papier de qualité voulue de couleur claire, en particulier blanche, dans lequel procédé de mise en pâte (3) les encres d' impression sont détachées des fibres de papier et à cet effet on utilise au moins une partie des produits de filtration, se produisant lors du traitement (4) suivant la mise en pâte et dans la machine à papier (6), c'est-à-dire l'eau de recyclage (7),
caractérisé
en ce que la mise en pâte (3) comporte au début une étape de procédé en vue du mouillage (2), au cours de laquelle les vieux papiers (1) arrivant, essentiellement secs, sont mouillés avec de l'eau (10 ou 11) et imprégnés jusqu'à ce qu'au moins les cavités des fibres de papier soient remplies d'eau, l'eau étant au plus très peu chargée de particules d'encre d'impression microscopiques et aussi exempt que possible de produits chimiques dissolvant les encres, à cet effect une partie de l'eau de recyclage (7) étant traitée avec des moyens (9) connus pour donner l'eau (11) et, éventuellement pour compléter, de l'eau fraîche (10) pure est introduite, et en ce que les vieux papiers ainsi mouillés et imprégnés ne sont soumis qu'après à l'étape de mise en pâte (3) proprement dite, par addition de l'eau de recyclage (7) obtenue de la manière décrite, à laquelle sont ajoutés au besoin, de manière conne, des produits chimiques dissolvant les encres.

2. Procédé selon la revendication 1, caractérisé en ce qu'une partie de l'eau de recyclage (7) est traitée avec des moyens (9) connus pour donner l'eau (11) qui est exempte de toute particule d'encre d'impression macroscopique et de produits chimiques dissolvant les encres, laquelle eau (11) est utilisée pour le mouillage (2) et l'imprégnation des vieux papiers (1).

3. Procédé selon la revendication 2, caractérisé en ce que l'eau de recyclage (7) est constituée en supplément aussi d'une partie des produits de filtration produits dans la machine à papier (6).

4. Procédé selon la revendication 1, caractérisé en ce que la quantité d'eau qui est envoyée pour remplir les cavités des fibres de papier à mouiller, correspond à peu près au poids à sec des fibres de papier.

5. Procédé selon la revendication 1, caractérisé en ce que le mouillage (2) et l'étape de mise en pâte (3) sont exécutés l'un après l'autre dans le même dispositif.

6. Procédé selon la revendication 1, caractérisé en ce que le mouillage (2) et l'étape de mise en pâte (3) sont exécutés dans des dispositifs différents, les vieux papiers étant introduits dans le premier dispositif, y étant mouillés puis transportés du premier dans le second dispositif (flèche 14), le deuxième dispositif étant un pulpeur.

7. Procédé selon la revendication 1, caractérisé en ce que le mouillage (2) s'effectue dans une première chambre de travail et l'étape de mise en pâte (3) dans une seconde chambre de travail, séparée de la première, du même dispositif, les vieux papiers étant transportés après mouillage (2) de la première dans la seconde chambre de travail.

8. Procédé selon la revendication 7, caractérisé en ce que la première chambre de travail est située plus haut que la seconde et le transport des vieux papiers mouillés de la première dans la seconde chambre de travail s'effectue par chute ou glissement vers le bas.
